# EUROPÄISCHE PATENTSCHRIFT

(11) **EP 3 566 033 B1**
(45) Veröffentlichungstag und Bekanntmachung des Hinweises auf die Patenterteilung: **02.06.2021**
(21) Anmeldenummer: 17808947.0
(22) Anmeldetag: 06.12.2017
(51) Int. Cl.: G01K 7/00, G01K 15/00, G01R 27/02

(54) **VORRICHTUNG UND VERFAHREN ZUR IN SITU KALIBRIERUNG EINES THERMOMETERS**
DEVICE AND METHOD FOR THE IN SITU CALIBRATION OF A THERMOMETER
DISPOSITIF ET PROCÉDÉ D'ÉTALONNAGE IN SITU D'UN THERMOMÈTRE

(30) Priorität: 09.01.2017 DE 102017100264
(43) Veröffentlichungstag der Anmeldung: 13.11.2019
(73) Patentinhaber: Endress+Hauser Wetzer GmbH+Co. KG, 87484 Nesselwang (DE)
(72) Erfinder: SCHALLES, Marc, 99097 Erfurt (DE)
(74) Vertreter: Andres, Angelika Maria
(86) Internationale Anmeldenummer: PCT/EP2017/081686
(87) Internationale Veröffentlichungsnummer: WO 2018/127348

(56) Entgegenhaltungen:
- WO-A2-2010/097279
- DE-A1-102010 040 039
- US-A- 3 311 842
- GARCIA F ET AL: "A magnetic phase transition temperature calibration device", JOURNAL OF APPLIED PHYSICS, AMERICAN INSTITUTE OF PHYSICS, US, Bd. 85, Nr. 8, 15. April 1999 (1999-04-15) , Seiten 5154-5156, XP012047377, ISSN: 0021-8979, DOI: 10.1063/1.369108

## Beschreibung

Die Erfindung bezieht sich auf eine Vorrichtung zur Bestimmung und/oder Überwachung der Temperatur eines Mediums umfassend zumindest einen Temperatursensor und ein Referenzelement.

Die Kalibrierung von Thermometern wird heutzutage üblicherweise in Kalibrierbädern, Öfen oder Fixpunkteinrichtungen durchgeführt. Eine entsprechende Fixpunktzelle ist beispielsweise in der Patentschrift DE102004027072B3 beschrieben. Allerdings muss bei diesen Methoden üblicherweise das Thermometer aus der jeweiligen Messstelle ausgebaut werden. Um ein Thermometer dagegen im eingebauten Zustand kalibrieren zu können, ist aus der DE19941731A1 eine miniaturisierte und in ein Thermometer integrierte, mit einer Fixpunktsubstanz, z. B. einem Metall oder einer eutektischen Legierung, gefüllten Fixpunktzelle bekannt geworden. In diesem Falle ist jedoch eine zusätzliche Zelle zum Kapseln der Fixpunktsubstanz erforderlich, was die Dynamik des Sensors, insbesondere die Ansprechzeit auf eine Temperaturänderung, verschlechtert. Außerdem kann es gegebenenfalls passieren, dass die Fixpunktsubstanz aus der Zelle austritt, was zu einer Beschädigung oder sogar zu einer Zerstörung des Thermometers führen kann.

Es wäre somit wünschenswert, eine Kalibrierung und/oder Validierung eines Thermometers im eingebauten Zustand, also in situ, durchführen zu können, bei welcher die genannten Nachteile nicht auftreten.

Im Prinzip lassen sich zur Bestimmung einer Temperatur verschiedenste physikalische und/oder chemische spezifische temperaturabhängige Materialeigenschaften ausnutzen. Dabei kann es sich entweder um eine an einem bestimmten charakteristischen Temperaturpunkt auftretende, insbesondere abrupte, Änderung der jeweiligen Eigenschaften oder auch um eine kontinuierliche Änderung dieser Eigenschaft in Form einer charakteristischen Kennlinie handeln. Beispielsweise stellt die Curie-Temperatur eines ferromagnetischen Materials einen charakteristischen Temperaturpunkt für dieses Material dar. In dieser Hinsicht ist aus der DE 4032092C2 ein Verfahren zur Ermittlung der Curie-Temperatur bekannt geworden, bei welchem mittels eines Differential-Scanning-Thermoanalysators eine abrupte Änderung der aufgenommenen Wärmemenge im Bereich der Curie-Temperatur festgestellt wird. In der DE19702140A1 wiederum werden eine Vorrichtung und ein Verfahren zur Messung der Temperatur eines rotierenden Trägerteils beschrieben mit einem Temperaturfühler, welcher einen ferro-oder paramagnetischen Werkstoff aufweist, der im jeweils interessanten Temperaturbereich eine temperaturabhängige Änderung seiner Polarisation zeigt. Es wird also eine Kennlinie der temperaturabhängigen Polarisation zur Bestimmung der Temperatur herangezogen.

Ein weiteres Beispiel, welches aus der DE19805184A1 bekannt geworden ist, beschreibt die Ermittlung der Temperatur eines piezoelektrischen Elements anhand seiner Kapazität. Ähnlich bezieht sich die Patentschrift DE69130843T2 auf ein Verfahren und eine Vorrichtung zur Bestimmung der Temperatur eines piezoelektrischen Kristalloszillators.

Das Heranziehen bestimmter charakteristischer Temperaturpunkte oder Kennlinien eignet sich grundsätzlich auch zur Kalibrierung und/oder Validierung von Thermometern.

So ist in der EP1247268B2 beispielsweise ein Verfahren zur in situ Kalibrierung mehrerer integrierter Temperatursensoren anhand von Kennlinien eines oder mehrerer Referenzelemente in Form von sekundären Temperatursensoren beschrieben, welche Referenzelemente in einen Thermometereinsatz zusätzlich zu einem primären Temperatursensor eingebaut sind. Damit eine Kalibrierung erfolgen kann, unterscheiden sich die jeweils verwendeten Referenzelemente in Bezug auf den Aufbau und/oder das jeweils verwendete Material vom primären Temperatursensor, was in unterschiedlichen Kennlinienverläufen resultiert. Nachteilig hierbei ist jedoch, dass üblicherweise auch die Kennlinien der Referenzelemente Alterungseffekten und/oder Sensordrift unterliegen.

Zur Vermeidung derartiger Nachteile sind aus der DE102010040039A1 eine Vorrichtung und ein Verfahren zur in situ Kalibrierung eines Thermometers mit einem Temperatursensor und einem Referenzelement zur Kalibrierung des Temperatursensors bekannt geworden, bei welcher das Referenzelement wenigstens teilweise aus einem ferroelektrischen Material besteht, welches im zur Kalibrierung des Temperatursensors relevanten Temperaturbereich eine Phasenumwandlung bei zumindest einer vorgegebenen Temperatur erfährt. Die Kalibrierung wird also anhand des charakteristischen Temperaturpunkts eines Phasenübergangs eines ferroelektrischen Materials, also anhand einer materialspezifischen Eigenschaft vorgenommen. Je nach Anzahl der verbauten Referenzelemente kann auf diese Weise sowohl eine sogenannte 1-Punkt- als auch eine Mehrpunkt- Kalibrierung und/oder Validierung vorgenommen werden. Eine ähnliche, insbesondere für Mehrpunkt-Kalibrierungen geeignete Vorrichtung, ist ferner aus der bisher unveröffentlichten, am 29.07.2016 eingereichten, deutschen Patentanmeldung mit dem Aktenzeichen 102015112425.4 derselben Anmelderin bekannt geworden. Das dort beschriebene Thermometer umfasst zumindest einen Temperatursensor und zumindest zwei über genau zwei Anschlussdrähte kontaktierte Referenzelemente, welche zumindest teilweise aus zwei unterschiedlichen Materialien bestehen, für welche Materialien jeweils im zur Kalibrierung des Temperatursensors relevanten Temperaturbereich zumindest ein Phasenübergang zumindest zweiter Ordnung bei jeweils einer vorgegebenen Phasenübergangstemperatur auftritt.

Garcia et al. 1999 ("A magnetic phase transition temperature calibration device", Journal of Applied Physics, Bd. 85, Nr. 8, 15. April 1999, Seiten 5154-5156) beschreibt eine Technik zur Herstellung von Temperatur Kalibriervorrichtungen, welche auf der Detektion magnetischer Eigenschaften eines Phasenübergangsmaterials beruhen.

Ausgehend vom Stand der Technik liegt der vorliegenden Erfindung die Aufgabe zugrunde, eine alternative Möglichkeit zur in situ Kalibrierung und/oder Validierung eines Temperatursensors anzugeben.

Diese Aufgabe wird gelöst durch eine Vorrichtung zur Bestimmung und/oder Überwachung der Temperatur eines Mediums nach Anspruch 1.

Hinsichtlich der erfindungsgemäßen Vorrichtung wird die Aufgabe gelöst durch eine Vorrichtung zur Bestimmung und/oder Überwachung der Temperatur eines Mediums, umfassend zumindest einen Temperatursensor, ein Referenzelement zur in situ Kalibrierung und/oder Validierung des Temperatursensors und eine Elektronikeinheit. Das Referenzelement besteht zumindest teilweise aus einem Material, für welches Material im zur Kalibrierung des Temperatursensors relevanten Temperaturbereich zumindest ein Phasenübergang bei zumindest einer ersten vorgegebenen Phasenübergangstemperatur auftritt, für welchen Phasenübergang das Material in der festen Phase verbleibt. Erfindungsgemäß ist die Elektronikeinheit dazu ausgestaltet, das Referenzelement und den Temperatursensor mit einem zeitlich dynamischen Anregesignal in Form eines Wechselstroms oder einer Wechselspannung zu beaufschlagen.

Das erfindungsgemäße Thermometer ist vorteilhaft für eine in situ Kalibrierung und/oder Validierung zumindest des ersten Temperatursensors ausgestaltet. Hierzu wird der Temperatursensor (Primärsensor) mit Hilfe eines Sekundärsensors (Referenzelement) kalibriert und/oder validiert.

Bei einem Phasenübergang in einem Material, welches Material in der festen Phase verbleibt, handelt es sich beispielsweise nach der Ehrenfestklassifikation um einen Phasenübergang zumindest zweiter Ordnung. Im Unterschied zu einem Phasenübergang erster Ordnung wird keine oder nur eine vernachlässigbare Menge latenter Wärme während des Phasenübergangs frei. Wenn keine oder nur eine vernachlässigbare Menge an latenter Wärme frei wird, kann - grundsätzlich und unabhängig von der gewählten Klassifikation für Phasenübergänge - unter anderem vorteilhaft gewährleistet werden, dass die mittels des Temperatursensors gemessene Temperatur zum Zeitpunkt des Auftretens eines Phasenübergangs, nicht, insbesondere nicht durch frei werdende latente Wärme, verfälscht wird.

In einer weiteren, heute deutlich gebräuchlicheren Klassifizierung von Phasenübergängen wird lediglich zwischen diskontinuierlichen (1. Ordnung) und kontinuierlichen (2. Ordnung) Phasenübergängen unterschieden [s. z. B. Lexikon der Physik, Spektrum Akademischer Verlag Heidelberg Berlin, Band 4 unter dem Stichwort "Phasenübergänge und andere kritische Phänomene]. Nach dieser Klassifikation wiederum lassen sich beispielsweise verschiedenen ferroelektrischen Materialien sowohl Phasenübergänge 1. als auch 2. Ordnung zuordnen, wobei in beiden Fällen das jeweilige Material, für das ein Phasenübergang stattfindet, während des Phasenübergangs in der festen Phase verbleibt.

Das Verbleiben in der festen Phase ist unabhängig von der gewählten Klassifikation eines Phasenübergangs für die vorliegende Erfindung bedeutend. Ein im festen Zustand verbleibendes Material ist mit Hinblick auf konstruktive Aspekte des Systems, insbesondere der Überwachungseinheit, besonders vorteilhaft.

Ein Phasenübergang beinhaltet eine Unstetigkeit in der zweiten Ableitung einer thermodynamischen Größe wie beispielsweise dem Druck, dem Volumen, der Enthalpie, oder der Entropie als Funktion beispielsweise der Temperatur. Typischerweise gehen Phasenübergänge mit der Änderung einer bestimmten spezifischen Materialeigenschaft einher, beispielsweise mit einem Wechsel der Kristallstruktur, oder einem Wechsel in den magnetischen, elektrischen oder dielektrischen Eigenschaften. Entsprechende materialspezifische Kenngrößen sind für das jeweilige Referenzelement bekannt und können für eine Kalibrierung und/oder Validierung eines Temperatursensors herangezogen werden. Dabei kann das zumindest eine Referenzelement einen oder mehrere Phasenübergänge, insbesondere Phasenübergänge in der festen Phase des jeweils verwendeten Materials, aufweisen. Jeder Phasenübergang findet bei einem bestimmten charakteristischen fixen und langzeitstabilen Temperaturwert statt, so dass für das Referenzelement im Prinzip keine Drift und/oder keine Alterungseffekte berücksichtigt werden müssen.

Indem das Referenzelement mit einem dynamischen, insbesondere zeitlich dynamischen, Anregesignal beaufschlagt wird, können weitere charakteristische Kenngrößen zur Detektion des Auftretens des zumindest einen Phasenübergangs herangezogen werden, welche im Falle eines statischen Anregesignals nicht verfügbar werden.

Während des Phasenübergangs ändert sich je nach Ausgestaltung des Referenzelements typischerweise beispielsweise die Permittivität, bzw. die magnetische Permeabilität des Materials, in welchem der Phasenübergang stattfindet. Diese charakteristischen Kenngrößen können je nach Ausgestaltung des Referenzelements mittels verschiedener Messprinzipien erfasst werden, beispielsweise anhand einer Kapazität oder Induktivität. Im Falle der Betrachtung der Kapazität oder Induktivität ist es nun so, dass sich die Permittivität bzw. Permeabilität aus den jeweiligen Real- und Imaginärteilen ergeben. Die Imaginärteile wiederum können bei einer Beaufschlagung des Referenzelements mittels eines dynamischen Anregesignals direkt erfasst werden. Die Beaufschlagung des Referenzelements mittels eines dynamischen Anregesignals erlaubt also vorteilhaft die direkte Erfassung der jeweiligen phasenübergangsabhängigen charakteristischen Kenngrößen.

Die Elektronikeinheit ist ferner bevorzugt dazu ausgestaltet, anhand eines von dem Referenzelement empfangenen Empfangssignals das Auftreten des zumindest einen Phasenübergangs zu detektieren. Anhand eines Vergleichs der Phasenübergangstemperatur mit einer im Wesentlichen zeitgleich mittels des Temperatursensors gemessenen Temperatur des Mediums kann dann eine Kalibrierung und/oder Validierung des Temperatursensors vorgenommen werden. Insbesondere handelt es sich bei dem Empfangssignal ebenfalls um ein dynamisches, insbesondere zeitlich dynamisches, Empfangssignal.

In einer Ausgestaltung handelt es sich bei dem Anregesignal und/oder einem von dem Referenzelement empfangenen Empfangssignal jeweils um ein sinusförmiges, rechteckförmiges, dreieckförmiges, sägezahnförmiges oder pulsförmiges Signal, insbesondere um ein Strom- oder Spannungssignal. Es handelt sich also um einen Wechselstrom oder eine Wechselspannung.

In einer vorteilhaften Ausgestaltung der erfindungsgemäßen Vorrichtung handelt es sich bei dem zumindest einen Material, aus welchem das Referenzelement zumindest teilweise besteht, um ein ferroelektrisches Material, um ein ferromagnetisches Material oder um ein supraleitendes Material, insbesondere um einen Hochtemperatursupraleiter. Entsprechend handelt es sich bei dem zumindest einen Phasenübergang um einen Phasenübergang vom ferroelektrischen in den paraelektrischen Zustand oder umkehrt, vom ferromagnetischen Zustand in den paramagnetischen Zustand oder umgekehrt oder vom supraleitenden Zustand in den normallleitenden Zustand oder umgekehrt. Bei der Phasenübergangstemperatur handelt es sich entsprechend beispielsweise um die Curie-Temperatur des jeweiligen Materials oder um die sogenannte Sprungtemperatur.

Eine weitere Ausgestaltung beinhaltet, dass die Elektronikeinheit dazu ausgestaltet ist, die Frequenz und/oder die Amplitude des Anregesignals zu variieren. Die Elektronikeinheit ist also insbesondere zur Durchführung einer Impedanz-Spektroskopie und/oder zur Durchführung eines Frequenz-Sweeps geeignet, bei welchem insbesondere ein vorgebbarer Frequenzbereich mit diskreten Frequenzen für das Anregesignal systematisch durchfahren wird. Betrachtet man beispielsweise als charakteristische Kenngröße zur Detektion des Phasenübergangs die Polarisation des jeweiligen Materials, aus welchem das Referenzelement zumindest teilweise besteht oder eine davon abhängige oder abgeleitete Größe, so kann diese Polarisation unterschiedliche Ursachen haben. Beispielsweise wird zwischen einer elektronischen, einer molekularen, einer dipolaren oder auch einer ionischen Polarisation unterschieden. Indem eine geeignete Frequenz für das Anregesignal gewählt wird, können einzelne der Polarisation zugrundeliegende Mechanismen gezielt ausgewählt werden. Das Stattfinden eines Phasenübergangs ist also anhand einer Polarisation frequenzabhängig detektierbar.

Für das Referenzelement sind erfindungsgemäß viele verschiedene Ausgestaltungen möglich, welche allesamt unter die vorliegende Erfindung fallen. Die nachfolgend beschriebenen zwei Möglichkeiten zur Ausgestaltung des Referenzelements sind also beispielhaft zu sehen und bilden keineswegs eine abschließende Auflistung.

In einer ersten bevorzugten Ausgestaltung handelt es sich bei dem Referenzelement um ein Kondensatorelement mit einem Dielektrikum, wobei das Dielektrikum wenigstens teilweise aus dem Material besteht, für welches Material der zumindest eine Phasenübergang auftritt. Für diese Ausgestaltung ist es entsprechend zweckdienlich, das Auftreten des zumindest einen Phasenübergangs anhand einer Kapazität oder einer von der Kapazität abhängigen Größe zu detektieren.

Eine alternative bevorzugte Ausgestaltung beinhaltet, dass es sich bei dem Referenzelement um eine Spulenanordnung mit zumindest einer Spule und einem magnetisch leitfähigen Körper handelt, wobei der Körper wenigstens teilweise aus dem Material besteht, für welches Material der zumindest eine Phasenübergang auftritt. Bei dieser Ausgestaltung ist es wiederum zweckdienlich, wenn der zumindest eine Phasenübergang anhand einer Induktivität oder einer von der Induktivität abhängigen Größe zu detektieren.

Die Wahl der speziellen Ausgestaltung des Referenzelements hängt einerseits von der jeweiligen Ausgestaltung des Thermometers ab. Weiterhin hängt die Ausgestaltung des Referenzelements auch von der jeweils zur Detektion des Phasenübergangs herangezogenen charakteristischen Kenngröße ab, bzw. die jeweils geeignete Kenngröße hängt von der jeweiligen Ausgestaltung des Referenzelements ab.

Als charakteristische Kenngrößen im Falle eines, insbesondere zeitlich, dynamischen Anregesignals eignen sich je nach Ausgestaltung des Referenzelements und des jeweiligen Thermometers, insbesondere der Elektronikeinheit, welche beispielsweise eine zur Erfassung der jeweiligen Größe geeignete, insbesondere elektronische, Messschaltung umfasst, beispielsweise die Kapazität, die Induktivität, die Impedanz oder auch der Verlustwinkel.

So ist in einer besonders bevorzugten Ausgestaltung vorgesehen, dass die Elektronikeinheit dazu ausgestaltet ist, eine Impedanz oder eine von der Impedanz abhängige Größe zumindest einer Komponente des Referenzelements zu ermitteln, und das Auftreten des Phasenübergangs anhand der Impedanz, oder einer von der Impedanz abhängigen Größe insbesondere des Verlaufs der Impedanz oder der von der Impedanz abhängigen Größe in Abhängigkeit von der Zeit und/oder Temperatur, zu detektieren.

Eine weitere besonders bevorzugte Ausgestaltung beinhaltet, dass die Elektronikeinheit dazu ausgestaltet ist, einen Verlustwinkel oder eine vom Verlustwinkel abhängige Größe zumindest einer Komponente des Referenzelements zu ermitteln, und das Auftreten des Phasenübergangs anhand des Verlustwinkels oder eine vom Verlustwinkel abhängigen Größe, insbesondere des Verlaufs des Verlustwinkels oder eine vom Verlustwinkel abhängigen Größe in Abhängigkeit von der Zeit und/oder Temperatur zu detektieren.

Noch eine weitere besonders bevorzugte Ausgestaltung beinhaltet, dass die Elektronikeinheit dazu ausgestaltet ist, eine Kapazität, eine Induktivität oder eine von der Kapazität und/oder Induktivität abhängige Größe zumindest einer Komponente des Referenzelements zu ermitteln, und das Auftreten des Phasenübergangs anhand der Kapazität, der Induktivität oder der von der Kapazität und/oder Induktivität abhängigen Größe, insbesondere des Verlaufs der Kapazität, der Induktivität oder der von der Kapazität und/oder Induktivität abhängigen Größe in Abhängigkeit von der Zeit und/oder Temperatur zu detektieren.

Auch für die jeweils verwendeten Messschaltungen bzw. die Elektronikeinheit sind viele unterschiedlichste Ausgestaltungen denkbar, mittels welcher die unterschiedlichen charakteristischen Kenngrößen erfasst werden können. Eine Reihe besonders bevorzugter Ausführungsbeispiele ist durch die nachfolgend genannten Ausgestaltungen gegeben. Es sei jedoch darauf verwiesen, dass die genannten Möglichkeiten keineswegs eine abschließende Auflistung darstellen. Vielmehr sind viele weitere geeignete Messprinzipien im Stand der Technik verfügbar, welche ebenfalls unter die vorliegende Erfindung fallen.

In einer Ausgestaltung umfasst die Elektronikeinheit eine Brückenschaltung, insbesondere eine Wien-Brücke oder eine Wien-Maxwell-Brücke, wobei das Referenzelement eine Komponente der Brückenschaltung ist. Die einer entsprechenden Brückenschaltung zugrundeliegenden Messprinzipien sind an sich aus dem Stand der Technik bekannt und werden daher hier nicht weiter detailliert erläutert. Vorteilhaft eignet sich eine Brückenschaltung auch zur Erfassung der Temperatur des jeweiligen Mediums, wenn der Temperatursensor beispielsweise in Form eines Widerstandselements ausgestaltet ist. Im Gegensatz zu Brückenschaltungen zur Verwendung mit, insbesondere zeitlich, statischen Anregesignalen ist vorteilhaft, dass im Falle von

Brückenschaltungen für, insbesondere zeitlich dynamische Signale, wie beispielsweise Wechselsignale, keine innerhalb der jeweiligen Brückenschaltung auftretenden Thermospannungen das jeweilige Messergebnis, bzw. Empfangssignal verfälschen. Im Falle, dass mittels der Brückenschaltung sowohl der Phasenübergang detektiert, als auch die Temperatur des Mediums ermittelt wird, handelt es sich um eine konstruktiv besonders einfache Ausführung der vorliegenden Erfindung. Eine Brückenschaltung kann besonders bevorzugt zur Bestimmung der phasenübergangsabhängigen Impedanz eingesetzt werden.

In einer anderen Ausgestaltung umfasst die Elektronikeinheit einen elektrischen Schwingreis, wobei das Referenzelement eine Komponente des Schwingkreises ist. Es kann sich bei dem Schwingkreis beispielsweise um einen RL-, RC, oder RCL-Schwingkreis handeln. Auch mittels eines Schwingkreises kann grundsätzlich beispielsweise auch anhand eines als Widerstandselement ausgestalteten Temperatursensors dessen Temperatur ermittelt werden. Im Falle eines Schwingkreises eignet sich beispielsweise zur Detektion des Phasenübergangs die Erfassung einer Zeitkonstante, anhand welcher für ein als Kondensatorelement bzw. als Spulenanordnung ausgestaltetes Referenzelement beispielsweise die Kapazität oder Induktivität bestimmbar ist.

Für diese Ausgestaltung ist es ferner von Vorteil, wenn die Elektronikeinheit dazu ausgestaltet ist, das Auftreten des zumindest einen Phasenübergangs anhand einer Änderung einer Resonanzfrequenz des Schwingreises zu detektieren. Die charakteristische Kenngröße ist für diese Ausgestaltung also durch die Resonanzfrequenz des Schwingkreises gegeben, welche beim Auftreten des zumindest einen Phasenübergangs eine, insbesondere sprungartige, Änderung durchläuft. Schließlich umfasst die Vorrichtung in einer Ausgestaltung Mittel zum Anlegen eines, insbesondere elektrischen, oder magnetischen Feldes, wobei die Elektronikeinheit dazu ausgestaltet ist, das Auftreten des zumindest einen Phasenübergangs anhand zumindest einer Hysterese-Kurve zu erkennen.

Unabhängig von der jeweiligen Ausgestaltung des Referenzelements, der jeweiligen Ausgestaltung der Elektronikeinheit und der jeweils zur Detektion des Phasenübergangs herangezogenen Kenngröße ist die Elektronikeinheit dazu ausgestaltet, den Tempertursensor mit einem dynamischen Anregesignal zu beaufschlagen. Dies zeichnet sich durch einen besonders einfachen konstruktiven Aufbau aus. Je nach konkreter Ausgestaltung können mittels einer elektronischen Anordnung gleichzeitig sowohl das Referenzelement als auch der Temperatursensor angesteuert und ausgelesen werden.

Die Erfindung wird anhand der nachfolgenden Zeichnungen näher erläutert. Gleiche Elemente der Vorrichtung sind jeweils mit demselben Bezugszeichen versehen. Es zeigt:
Fig. 1: eine schematische Darstellung eines Thermometers mit einem Temperatursensor und einem Referenzelement zur in situ Kalibrierung und/oder Validierung des Temperatursensors nach Stand der Technik,
Fig. 2:eine schematische Darstellung einer Kalibrierung und/oder Validierung des Temperatursensors anhand des Referenzelements,
Fig. 3: eine zweite Ausgestaltung einer erfindungsgemäßen Vorrichtung mit zwei erfindungsgemäßen Temperatursensoren und einem Referenzelement,
Fig. 4: eine schematische Darstellung für eine Ausgestaltung des Referenzelements als (a) Kondensatorelement und (b) als Spulenanordnug
Fig. 5 eine schematische Darstellung für eine Elektronikeinheit mit einer Brückenschaltung für ein Referenzelement in Form (a) eines Kondensatorelements und (b) in Form einer Spulenanordnung,
Fig. 6: eine schematische Darstellung für eine Elektronikeinheit in Form eines Schwingkreises für ein Referenzelement in Form (a) eines Kondensatorelements und (b) in Form einer Spulenanordnung, und
Fig. 7: eine schematische Darstellung für eine Elektronikeinheit, welche zur Detektion eines Phasenübergangs anhand einer Hysterese-Kurve geeignet ist, für ein Referenzelement in Form (a) eines Kondensatorelements und (b) in Form einer Spulenanordnung.

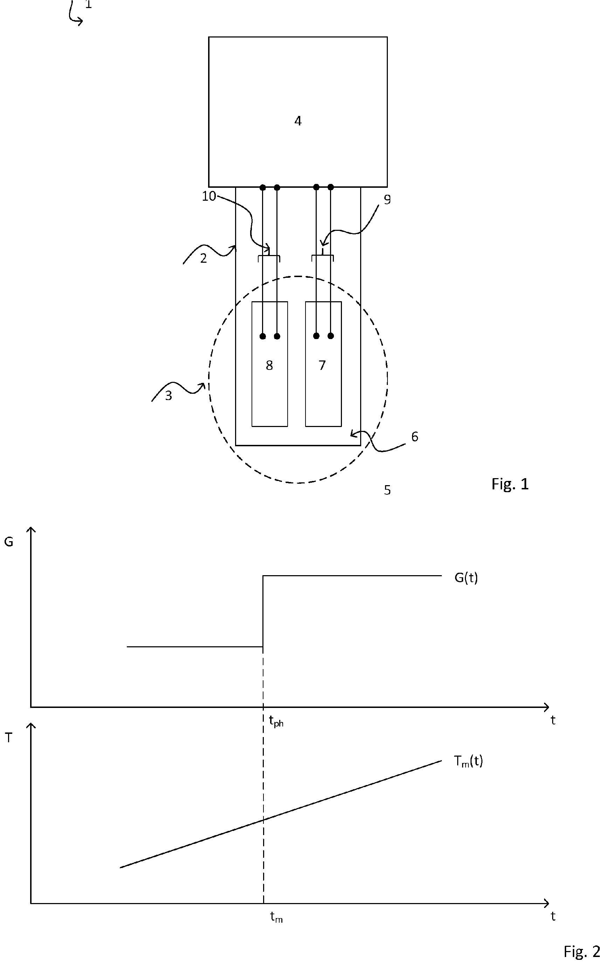

In Fig.1 ist eine schematische Abbildung eines Thermometers 1 mit einem Schutzrohr 2 und einer Elektronikeinheit 3 gemäß Stand der Technik gezeigt, welches für eine in situ Kalibrierung und/oder Validierung geeignet ist. Der dem jeweiligen Medium 5 zugewandte Teilbereich des Schutzrohres 2 wird auch als Sensorkopf 3 bezeichnet. Das Innenvolumen des Sensorkopfes 3 ist mit einem, insbesondere elektrisch isolierenden, Füllstoff 6, insbesondere einem Zement, gefüllt. Ferner sind im Inneren des Sensorkopfes 3 ein Temperatursensor 7 und ein Referenzelement 8 angeordnet, welche jeweils mittels zumindest zwei Anschlussdrähten, 9,10, insbesondere elektrisch, kontaktiert und mit der Elektronikeinheit 4 verbunden sind. Bei dem Temperatursensor 7 handelt es sich beispielsweise um ein Widerstandselement oder um ein Thermoelement. Das Referenzelement 8 wiederum besteht zumindest teilweise aus einem Material, für welches Material innerhalb des für den Betrieb der Vorrichtung relevanten Temperaturbereichs zumindest ein Phasenübergang zumindest zweiter Ordnung bei zumindest einer vorgegebenen Phasenübergangstemperatur auftritt. Die Anzahl der notwendigen Anschlussdrähte 9,10 zur Kontaktierung des Referenzelements und des Temperatursensors 7,8 kann je nach Art des angewendeten Messprinzips variieren. In der gezeigten Ausgestaltung sind der Temperatursensor 7 und das Referenzelement 8 voneinander beabstandet innerhalb desselben Sensorkopfes 3 angeordnet. Sie können aber ebenfalls in direktem Kontakt miteinander stehen und beispielsweise miteinander verlötet sein.

Wie der Temperatursensor 7 mittels des Referenzelements 8 kalibriert und/oder validiert werden kann, ist in Fig. 2 illustriert. Das obere Diagramm zeigt den Verlauf einer zur Detektion des Phasenübergangs verwendeten charakteristischen physikalischen oder chemischen Größe G. Findet in dem Referenzelement 8 ein Phasenübergang statt, so erfolgt in dem gezeigten Beispiel eine sprunghafte Änderung der Größe G. Der Zeitpunkt, zu welchem die sprunghafte Änderung der Größe detektiert wird, ist der Phasenübergangszeitpunkt tₚₕ, zu welchem das Referenzelement 8 die Phasenübergangstemperatur Tₚₕ aufweist.

Im unteren Diagramm ist die mittels des Temperatursensors 7 ermittelte Sensortemperatur T als Funktion der Zeit t dargestellt. Zur Kalibrierung und/oder Validierung des Temperatursensors 7 anhand des Referenzelements 8 wird beispielsweise derjenige Messzeitpunkt tₘ ermittelt, welcher den kürzesten zeitlichen Abstand zum Phasenübergangszeitpunkt tₚₕ aufweist. Die dem Messzeitpunkt tₘ entsprechende Sensortemperatur Tₘ wird mit der Phasenübergangstemperatur Tₚₕ verglichen. Anhand des Vergleichs kann dann eine Kalibrierung und/oder Validierung vorgenommen werden. Außerdem kann im Falle einer Abweichung ΔT= Tₘ(tₘ)-Tₚₕ(tₚₕ) über einen vorgebbaren Grenzwert hinaus kann das Thermometer 1 justiert werden und/oder eine Meldung über das Bestehen einer Abweichung generiert und/oder ausgegeben werden.

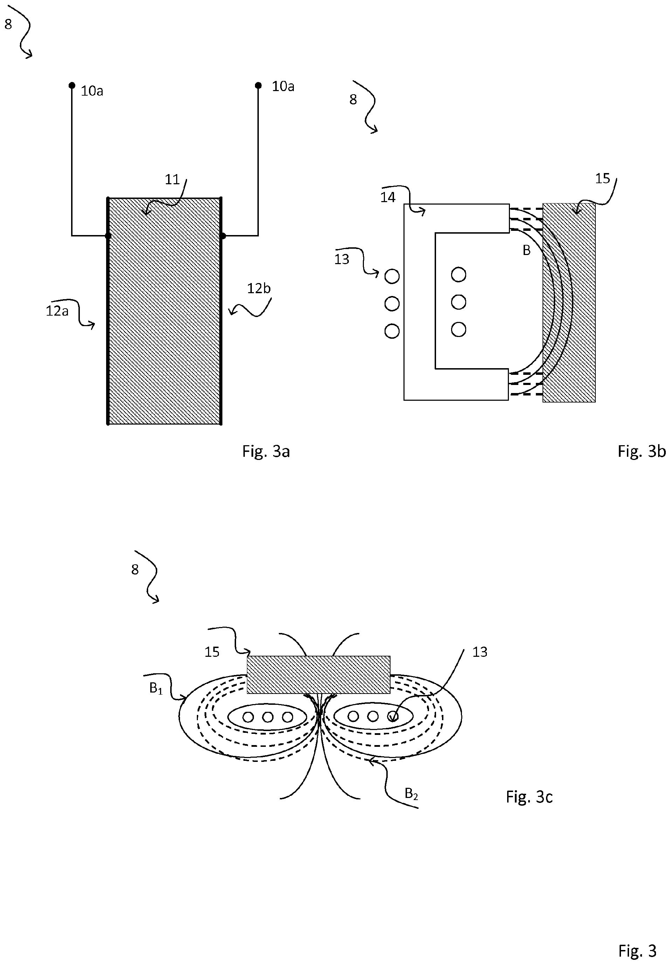

Drei beispielhafte, mögliche Ausgestaltungen für das Referenzelement 8 sind in Fig. 3 gezeigt. Im Falle eines ferroelektrischen Materials eignet sich beispielsweise eine Ausgestaltung des Referenzelements 8 in Form eines Kondensatorelements. Das Material 11, für welches der Phasenübergang auftritt, bildet in diesem Fall das Dielektrikum. Das Referenzelement 8 umfasst ferner zwei Elektroden 12a und 12b, welche im hier gezeigten Beispiel direkt auf zwei sich gegenüberliegende Seitenflächen des Materials 10, welches als im Wesentlichen kubischer Körper ausgestaltet ist, angeordnet und mittels der zwei Anschlussleitungen 10a und 10b elektrisch kontaktiert, um beispielsweise die Kapazität C_{ref} des Referenzelements 8 zu detektieren und anhand einer insbesondere sprunghaften Änderung der Kapazität C_{ref} zu detektieren. Für weitere Details zu dieser Ausgestaltung des Referenzelements 8 in Form eines Kondensatorelements sei auf die Offenlegungsschrift DE102010040039A1 verwiesen.

Im Falle eines Referenzelements 8 umfassend ein ferromagnetisches Material 10 bietet sich eine Ausgestaltung in Form einer Spulenanordnung an, wie beispielhaft in den Figuren Fig. 3b und Fig. 3c gezeigt. Eine Möglichkeit zur Detektion eines Phasenübergangs bei einer derartigen Ausgestaltung des Referenzelements 8 besteht in der Detektion einer Änderung der Induktivität L_{ref} der Anordnung. Bei einem Phasenübergang vom ferromagnetischen zum paramagnetischen Zustand ändert sich der magnetische Widerstand des Materials 15, für welches der Phasenübergang stattfindet, und folglich beispielsweise auch die Induktivität L_{ref} der Anordnung.

In der Ausgestaltung gemäß Fig. 3b umfasst das Referenzelement 8 eine Spule 13 mit Kern 14, und einen magnetisch leitfähigen Körper 15, welcher aus dem ferromagnetischen Material besteht. Der magnetisch leitfähige Körper 15 ist derart angeordnet, dass er sich zumindest teilweise in einem von der Spule 13 mit dem Kern 14 ausgehenden magnetischen Feld B befindet, welches durch die Einzeichnung von Feldlinien illustriert ist. Bei einem Phasenübergang in dem magnetisch leitfähigen Körper 15 ändert sich das magnetische Feld B, welches beispielsweise anhand einer Änderung der Induktivität L der Anordnung detektierbar ist.

Die Verwendung eines Kerns 14 für die Spule 13 ist allerdings optional. Eine mögliche Ausgestaltung des Referenzelements 8 als Spulenanordnung ohne Kern ist entsprechend in Fig. 3c gezeigt. In dieser Abbildung ist ferner beispielhaft einerseits das magnetische Feld B₁ eingezeichnet, welches vorherrscht, wenn sich das Material 15 im ferromagnetischen Zustand befindet. Darüber hinaus ist in gestrichelten Linien das Magnetfeld B₂, welches vorherrscht, wenn sich das Material 15 im paramagnetischen Zustand befindet, eingezeichnet.

Bei einer Beaufschlagung des Referenzelements 8 mit einem, insbesondere zeitlich, dynamischen Anregesignal U_{A,dyn}, können verschiedene charakteristische Kenngrößen des Referenzelements 8 zur Erfassung des zumindest einen Phasenübergangs herangezogen werden, insbesondere solche, welche im Falle eines statischen Anregesignals nicht verfügbar wären.

Bei einem Phasenübergang in einem als Kondensatorelement ausgestalteten Referenzelement 8, wie in Fig. 3a, ändert sich beispielsweise die Permittivität des Materials, welches in diesem Falle als Dielektrikum vorliegt. Als charakteristische Kenngröße eignet sich entsprechend beispielsweise die Kapazität C_{ref}. Bei einem Phasenübergang in einem als Spulenanordnung ausgestalteten Referenzelement 8, wie in Fig. 3b oder Fig. 3c, dagegen ändert sich die Permeabilität des jeweiligen Materials, hier des magnetisch leitfähigen Körpers 15. Hier ist wiederum die Induktivität L_{ref} eine geeignete charakteristische Kenngröße. Im Falle der Betrachtung der Kapazität C_{ref} oder Induktivität L_{ref} ist es nun so, dass die Permittivität bzw. Permeabilität direkt mit den jeweiligen Imaginärteilen verknüpft sind. Diese Imaginärteile wiederum können bei einer Beaufschlagung des Referenzelements mittels eines dynamischen Anregesignals direkt erfasst werden.

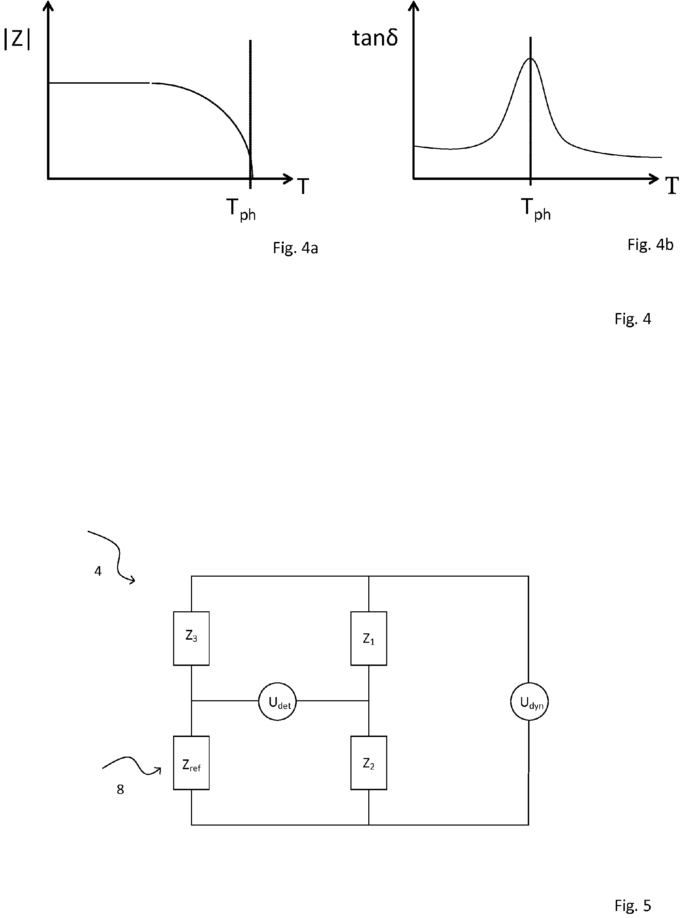

Neben der Kapazität C_{ref} oder Induktivität L_{ref} sind beispielsweise weitere charakteristische Kenngrößen, welche im Falle einer Beaufschlagung des Referenzelements 8 bevorzugt zur Detektion des Auftretens eines Phasenübergangs erfasst werden können, die Impedanz Z oder der Verlustwinkel δ, wie in Fig. 4 illustriert. Obgleich die Erfindung keineswegs auf die genannten charakteristischen Kenngrößen zur Detektion eines Phasenübergangs beschränkt ist, bezieht sich der Einfachheit halber die nachfolgende Beschreibung auf die genannten Größen - die Induktivität L, die Kapazität C, die Impedanz Z sowie den Verlustwinkel δ.

Zur Detektion des Phasenübergangs anhand der Impedanz Z oder anhand des Verlustwinkels δ kann das Referenzelement 8 beispielsweise entsprechend einer der in Fig. 3 gezeigten Ausführungen ausgestaltet werden. In Fig. 4a ist der Betrag der Impedanz, also des Wechselstromwiderstands, als Funktion der Temperatur schematisch dargestellt. Bei der Phasenübergangstemperatur Tₚₕ wird die Impedanz minimal, so dass beispielsweise anhand des zeitlichen Verlaufs des Betrags der Impedanz das Auftreten eines Phasenübergangs in dem Referenzelement 8 detektiert werden kann. Der Verlustwinkel δ, welcher das Verhältnis von Wirkleistung zu Blindleistung angibt, wird dagegen bei der Phasenübergangstemperatur Tₚₕ maximal, wie in Fig. 4b schematisch dargestellt. Auch anhand des zeitlichen Verlaufs des Verlustwinkels δ kann also das Auftreten eines Phasenübergangs geschlossen werden.

Werden die Impedanz Z und/oder der Verlustwinkel δ außerdem bei zumindest zwei unterschiedlichen Anregesignalen U_{A,dyn,1} und U_{A,dyn,2} mit zumindest zwei unterschiedlichen Frequenzen f₁ und f₂ durchgeführt, und wird jeweils das Verhältnis der Impedanzen Z(f₁)/Z(f₂) oder Verlustwinkel δ(f₁)/δ(f₂) gebildet, kann der Phasenübergang ebenfalls anhand des jeweiligen Verhältnisses erfasst werden. Diese Verhältnisse sind vorteilhaft unabhängig von den jeweiligen Absolut-Werten der jeweiligen Anregesignale U_{A,dyn,1} und U_{A,dyn,2}.

In den nachfolgenden Figuren sind einige besonders bevorzugte Ausgestaltungen einer erfindungsgemäßen Elektronikeinheit 4 gezeigt, welche zur Erfassung verschiedener charakteristischer Kenngrößen, wie der Kapazität C, der Induktivität L, der Impedanz Z oder des Verlustwinkels δ heranziehbar sind.

Gemäß der Ausgestaltung in Fig. 5 umfasst die Elektronikeinheit 4 eine Brückenschaltung mit vier Impedanzen Z₁-Z₃ und Z_{ref} gezeigt. Das Referenzelement 8 bildet zumindest eine Komponente der Brückenschaltung, insbesondere der Impedanz Z_{ref} und zumindest eine der Impedanzen Z₁-Z₃ weist zumindest eine elektronische Komponente elektrisch einstellbarer Größe auf. Je nach Ausgestaltung des Referenzelements 8 kann es sich bei den einzelnen Impedanzen Z₁-Z₃ und Z_{ref} je um einen Widerstand R, eine Kapazität C, eine Induktivität L oder um eine in zumindest teilweise in Reihe und/oder zumindest teilweise parallel geschaltete Anordnung zumindest zweier der genannten Elemente R,C,L handeln.

Im Falle der Ausgestaltung des Referenzelements 8 in Form eines Kondensatorelements eignet sich beispielsweise die Realisierung einer sogenannten Wien-Brücke. Im Falle eines als Spulenanordnung ausgestalteten Referenzelements 8 umfasst die Elektronikeinheit 4 dagegen bevorzugt eine sogenannte Wien-Maxwell-Brückenschaltung. Die diesen beiden Messschaltungen zugrundeliegenden Messprinzipien sind an sich aus dem Stand der Technik bekannt, weswegen diese hier nicht detailliert erläutert werden. Die Elektronikeinheit 4, insbesondere die Brückenschaltung, wird mittels des dynamischen Anregesignals U_{A,dyn} angeregt. Die phasenübergangsabhängige Impedanz Z der Brückenschaltung lässt sich dann anhand der Diagonalspannung U_{det} ermitteln. Befindet sich die Brückenschaltung im abgeglichenen Zustand, so beträgt die Diagonalspannung U_{det} null und man kann anhand einer für die jeweilige Brückenschaltung charakteristischen Abgleichbedingung mit Hilfe der bekannten Impedanzen Z₁-Z₃ die unbekannte Impedanz Z_{ref} errechnen. Ändert sich die Impedanz Z_{ref}, beispielsweise in Folge eines Phasenübergangs in dem Referenzelement 8, so wird die Brückenschaltung verstimmt und die Diagonalspannung U_{det} wird ungleich null. Zur Detektion einer Änderung der phasenübergangsabhängigen Impedanz Z_{ref} kann beispielsweise das sogenannte Abgleichverfahren oder das sogenannte Ausschlagverfahren verwendet werden. Beide Verfahren sind an sich aus dem Stand der Technik bekannt.

Beim Abgleichverfahren wird zumindest eine Komponente zumindest einer der bekannten Impedanzen Z₁-Z₃ verändert, bis erneut ein Abgleich erreicht ist und erneut die unbekannte Impedanz Z_{ref} mittels der jeweiligen Abgleichbedingung errechnet werden kann. Vorteilhaft bei diesem Verfahren ist, dass nur eine Detektion des Spannungszustands null der Diagonalspannung U_{det} notwendig ist. Allerdings ist der jeweilige Abgleich der Impedanzen Z₁-Z₃ und Z_{ref} vergleichsweise aufwendig. Beim einfacheren Ausschlagverfahren findet dagegen kein Abgleich der Brückenschaltung statt. Stattdessen wird aus der gemessenen Diagonalspannung U_{det} die unbekannte Impedanz Z_{ref} ermittelt. Hier ist allerdings eine genauere Spannungsmessung erforderlich.

Im Gegensatz zu Brückenschaltungen für, insbesondere zeitlich, statische Signale, also beispielsweise für Gleichspannungsmessbrücken, erfolgt im Falle von Wechselspannungsbrückenschaltungen vorteilhaft keine negative Beeinflussung des jeweiligen Messsignals durch auftretende Thermospannungen innerhalb der Messschaltung. Ein weiterer Vorteil einer Brückenschaltung zur Verwendung mit einem, insbesondere zeitlich dynamischen, Anregesignal liegt darin, dass mittels einer entsprechenden Schaltung neben einer für das Referenzelement 8 charakteristischen Kenngröße ebenfalls ein Widerstand bestimmt werden kann. Im Falle, dass der Temperatursensor 7 in Form eines Widerstandselements ausgestaltet ist, kann also mittels derselben Brückenschaltung die Temperatur des jeweiligen Mediums 5 bestimmt werden. Eine derartige Ausgestaltung zeichnet sich vorteilhaft durch einen besonders kompakten Aufbau aus.

Eine weitere nicht anhand einer Figur illustrierte Möglichkeit zur Bestimmung des Verlustwinkels δ besteht beispielsweise darin, das Referenzelement 8 mittels eines dynamischen Anrege-Stromsignals, also mittels eines Wechselstroms, zu beaufschlagen, und über einen geeignet gewählten Messwiderstand ein zum Anrege-Stromsignal phasenverschobenes Empfangs-Spannungssignal, insbesondere eine Wechselspannung, zu detektieren. Alternativ ist es auch möglich ein Anregesignal in Form einer Wechselspannung zu verwenden und ein phasenverschobenes Empfangssignal in Form eines Wechselstroms abzugreifen. Bei dieser Ausgestaltung kann ferner anhand des Amplitudenverhältnisses der Momentanwerte von Strom und Spannung die Impedanz Z=U(t)/I(t) ermittelt werden.

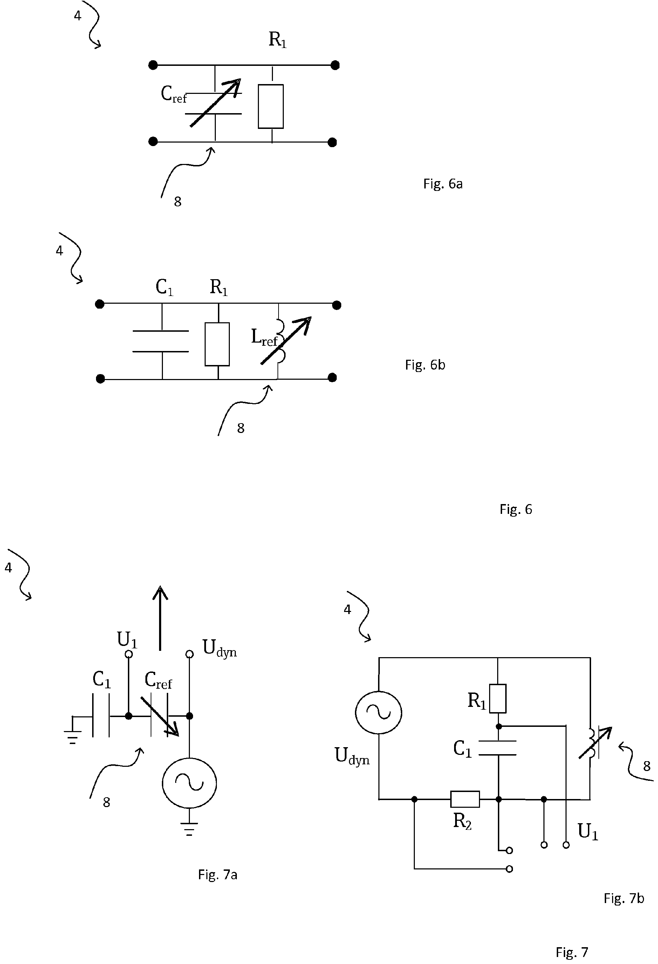

Alternativ zu den bisher beschriebenen Ausgestaltungen kann das Referenzelement 8, welches erneut beispielsweise in Form eines Kondensatorelements oder in Form einer Spulenanordnung gemäß Fig. 3 ausgestaltet ist, in einen elektrischen Schwingkreises innerhalb der Elektronikeinheit 4 integriert werden, wie in Fig. 6 illustriert. Als charakteristische Kenngröße zur Detektion des Phasenübergangs bietet sich in diesem Fall bevorzugt eine Zeitkonstante für das Referenzelement 8 oder eine Resonanzfrequenz f₀ des Schwingkreises an.

Für den Fall eines als Kondensatorelements mit Kapazität C_{ref} ausgebildeten Referenzelements 8, wie in Fig. 6a, ist beispielsweise ein RC-Schwingkreis mit dem Widerstand R₁ realisierbar, welcher in Abhängigkeit des Referenzelements 8 geeignet gewählt wird. Im Falle einer Ausgestaltung des Referenzelements 8 als Spulenanordnung mit der Induktivität L_{ref}, wie in Fig. 6b dagegen, eignet sich beispielsweise ein RCL-Schwingkreis mit dem Widerstand R₁ und der Kapazität C₁, welche beide in Abhängigkeit vom Referenzelement 8 gewählt werden. Neben den beiden gezeigten Varianten sind jedoch noch zahlreiche weitere Ausgestaltungen für den jeweiligen Schwingkreis denkbar, welche ebenfalls unter die vorliegende Erfindung fallen.

Im Falle des Auftretens eines Phasenübergangs ändert sich die Resonanzfrequenz f₀ des Schwingkreises, so dass eine Änderung der Resonanzfrequenz f₀ des Schwingkreises zur Detektion des Phasenübergangs bei der Phasenübergangstemperatur Tₚₕ grundsätzlich herangezogen werden kann.

Zur Ermittlung einer Zeitkonstante kann dagegen beispielsweise folgendermaßen vorgegangen werden: Als Anregesignal wird bevorzugt ein Rechtecksignal verwendet. Im Falle eines als Kondensatorelements ausgebildeten Referenzelements 8 wird dann beispielsweise die Zeit für einen Aufladevorgang des Kondensatorelements bis zu einem vorgebbaren Spannungsschwellenwert gemessen. Im Falle eines als Spulenanordnung ausgestalteten Referenzelements 8 kann dagegen beispielsweise die Zeit, bis ein Strom durch die Spule einen vorgebbaren Stromschwellenwert, oder die Zeit, bis eine durch die Spule fließende Spannung unter einen vorgebbaren Spannungsschwellenwert sinkt, ermittelt werden. Die gemessene Zeit ist jeweils ein Maß für die Kapazität C_{ref} bzw. die Induktivität L_{ref} des Referenzelements 8.

Eine weitere Möglichkeit besteht darin, eine Phasenverschiebung zwischen dem Anregesignal und Empfangssignal zu bestimmen, anhand welcher Phasenverschiebung beispielsweise ebenfalls auf die Kapazität C_{ref} oder die Induktivität L_{ref} des Referenzelements 8 geschlossen werden kann. Schließlich ist es ebenfalls möglich, ein amplitudenmodulierte Messung bei einem festen Widerstand R₁ durchzuführen. Die Amplitudenänderung des Empfangssignals ist dabei ebenfalls ein Maß für die Kapazität C_{ref} bzw. die Induktivität L_{ref}.

Im Falle, dass der zumindest eine Phasenübergang dagegen anhand einer Hysterese-Kurve detektiert wird, bietet sich schließlich beispielsweise eine Messschaltung entsprechend einer der Ausgestaltungen aus Fig. 7 an. Ähnlich wie für die vorherigen Figuren ist das Referenzelement 8 Teil der jeweiligen elektrischen Messschaltung innerhalb der Elektronikeinheit 4.

Zur Erfassung einer Hysterese-Kurve wird die Änderung der Polarisation des jeweiligen Materials, in welchem der Phasenübergang auftritt, durch Anlegen einer zeitlich dynamischen Spannung U_{A,dyn}, erfasst. Die jeweilige Hysterese-Kurve ergibt sich durch Auftragung jeweils der Spannung U₁ in Abhängigkeit von U_{A,dyn} aufgetragen. Das Auftreten eines Phasenübergangs kann beispielsweise anhand einer Änderung des Verhältnisses der Spannungen U_{A,dyn} und U₁ detektiert werden.

Für die Ausgestaltung gemäß Fig. 7a handelt es sich bei dem Referenzelement 8 um ein Kondensatorelement mit der Kapazität C_{ref}, wie beispielsweise in Fig. 3a dargestellt. Entsprechend handelt es sich um einen Phasenübergang vom ferroelektrischen in den paraelektrischen Zustand oder umgekehrt. Bei der gezeigten Messschaltung handelt es sich um eine sogenannte Sawyer-Tower-Schaltung, welche an sich bestens aus dem Stand der Technik bekannt ist und deshalb hier nicht detailliert beschrieben wird.

Eine elektrische Schaltung zur Detektion eines Phasenübergangs im Falle eines Referenzelements 8 in Form einer Spulenanordnung mit der Induktivität L_{ref}, wie beispielsweise in einer der Figuren Fig. 3b oder Fig. 3c gezeigt, welche jeweils ein ferromagnetisches Material umfasst, ist dagegen in Fig. 7b dargestellt. Die Kapazität C₁, sowie die Widerstände R₁ und R₂ sind jeweils auf das verwendete Referenzelement 8 angepasst.

### Bezugszeichenliste

- 1: Thermometereinsatz
- 2: Schutzrohr
- 3: Sensorkopf
- 4: Elektronikeinheit
- 5: Medium
- 6: Füllstoff
- 7: Temperatursensor
- 8: Referenzelement
- 9,9a,9b: Anschlussleitungen des Referenzelements
- 10: Anschlussleitungen des Temperatursensors
- 11: Ferroelektrisches Material, Dielektrikum
- 12a,12b: Elektroden
- 13: Spule
- 14: Kern
- 15: Ferromagnetisches Material, magnetisch leitfähiger Körper

- C, C_{ref}: Kapazität des Referenzelements
- L, L_{ref}: Induktivität des Referenzelements
- T_{Ph}: Phasenübergangstemperatur
- tₚₕ: Phasenübergangs-Zeitpunkt tₚₕ
- t: Zeit
- Z: Impedanz
- δ: Verlustwinkel
- B, B₁, B₂: Magnetfeld
- U_{A,dyn}: dynamisches Anregesignal
- U_{E,dyn}: dynamisches Empfangssignal
- U_{det}: Diagonalspannung der Brückenschaltung

## Patentansprüche

1. Vorrichtung (1) zur Bestimmung und/oder Überwachung der Temperatur (2) eines Mediums (5) umfassend zumindest einen Temperatursensor (7), ein Referenzelement (8) zur in situ Kalibrierung und/oder Validierung des Temperatursensors (7) und eine Elektronikeinheit (4),
wobei das Referenzelement (8) zumindest teilweise aus einem Material (10,15) besteht, für welches Material (10,15) im zur Kalibrierung des Temperatursensors (7) relevanten Temperaturbereich zumindest ein Phasenübergang bei zumindest einer ersten vorgegebenen Phasenübergangstemperatur (Tₚₕ) auftritt, für welchen Phasenübergang das Material (10,15) in der festen Phase verbleibt,
**gekennzeichnet dadurch,**
**dass** die Elektronikeinheit (4) dazu ausgestaltet ist, das Referenzelement und den Temperatursensor (7) mit einem zeitlich dynamischen Anregesignal (U_{dyn}) in Form eines Wechselstroms oder einer Wechselspannung zu beaufschlagen.

2. Vorrichtung (1) nach Anspruch 1,
**gekennzeichnet dadurch,**
**dass** es sich bei dem Anregesignal (U_{dyn}) und/oder einem von dem Referenzelement (8) empfangenen Empfangssignal (U_{E,dyn}) jeweils um ein sinusförmiges, rechteckförmiges, dreieckförmiges, sägezahnförmiges oder pulsförmiges Signal handelt.

3. Vorrichtung (1) nach Anspruch 1 oder 2,
**gekennzeichnet dadurch,**
**dass** es sich bei dem Material (10,15) um ein ferroelektrisches Material, um ein ferromagnetisches Material, oder um ein supraleitendes Material, insbesondere um einen Hochtemperatursupraleiter, handelt.

4. Vorrichtung (1) nach zumindest einem der vorhergehenden Ansprüche,
**gekennzeichnet dadurch,**
**dass** die Elektronikeinheit (4) dazu ausgestaltet ist, die Frequenz und/oder die Amplitude des Anregesignals (U_{dyn}) zu variieren.

5. Vorrichtung (1) nach zumindest einem der vorhergehenden Ansprüche,
**gekennzeichnet dadurch,**
**dass** es sich bei dem Referenzelement (8) um ein Kondensatorelement mit einem Dielektrikum (10) handelt, wobei das Dielektrikum (10) wenigstens teilweise aus dem Material besteht, für welches Material der zumindest eine Phasenübergang auftritt.

6. Vorrichtung (1) nach zumindest einem der Ansprüche 1-4
**gekennzeichnet dadurch,**
**dass** es sich bei dem Referenzelement (8) um eine Spulenanordnung mit zumindest einer Spule (13) und einen magnetisch leitfähigen Körper (15) handelt, wobei der Körper (15) wenigstens teilweise aus dem Material besteht, für welches Material der zumindest eine Phasenübergang auftritt.

7. Vorrichtung (1) nach zumindest einem der vorhergehenden Ansprüche,
**gekennzeichnet dadurch,**
**dass** die Elektronikeinheit (4) dazu ausgestaltet ist, eine Impedanz (Z) oder eine von der Impedanz (Z) abhängige Größe, zumindest einer Komponente des Referenzelements (8) zu ermitteln, und das Auftreten des Phasenübergangs anhand der Impedanz (Z), oder der von der Impedanz (Z) abhängigen Größe, insbesondere des Verlaufs der Impedanz (Z) oder der davon abhängigen Größe, in Abhängigkeit von der Zeit und/oder Temperatur, zu detektieren.

8. Vorrichtung (1) nach zumindest einem der vorhergehenden Ansprüche,
**gekennzeichnet dadurch,**
**dass** die Elektronikeinheit (4) dazu ausgestaltet ist, einen Verlustwinkel (δ), oder eine vom Verlustwinkel (δ) abhängige Größe zumindest einer Komponente des Referenzelements (8) zu ermitteln, und das Auftreten des Phasenübergangs anhand des Verlustwinkels (δ) oder vom Verlustwinkel (δ) abhängige Größe, insbesondere anhand des Verlaufs des Verlustwinkels (δ) oder vom Verlustwinkel (δ) abhängigen Größe in Abhängigkeit von der Zeit und/oder Temperatur zu detektieren.

9. Vorrichtung (1) nach zumindest einem der vorhergehenden Ansprüche,
**gekennzeichnet dadurch,**
**dass** die Elektronikeinheit (4) dazu ausgestaltet ist, eine Kapazität (C), eine Induktivität (L) oder eine von der Kapazität (C) und/oder Induktivität (L) abhängigen Größe zumindest einer Komponente des Referenzelements (8) zu ermitteln, und das Auftreten des Phasenübergangs anhand der Kapazität (C), der Induktivität (L) oder der von der Kapazität (C) und/oder Induktivität (L) abhängigen Größe, insbesondere des Verlaufs Kapazität (C), der Induktivität (L) oder der von der Kapazität (C) und/oder Induktivität (L) abhängigen Größe in Abhängigkeit von der Zeit und/oder Temperatur zu detektieren.

10. Vorrichtung (1) nach zumindest einem der vorhergehenden Ansprüche,
**gekennzeichnet dadurch,**
**dass** die Elektronikeinheit (4) eine Brückenschaltung, insbesondere eine Wien-Brücke oder eine Wien-Maxwell-Brücke umfasst, und dass das Referenzelement (8) eine Komponente der Brückenschaltung ist.

11. Vorrichtung (1) nach zumindest einem der Ansprüche 1-9,
**gekennzeichnet dadurch,**
**dass** die Elektronikeinheit (4) einen elektrischen Schwingkreis umfasst, und dass das Referenzelement (8) eine Komponente des Schwingkreises ist.

12. Vorrichtung (1) nach Anspruch 11,
**gekennzeichnet dadurch,**
**dass** die Elektronikeinheit (4) dazu ausgestaltet ist, das Auftreten des zumindest einen Phasenübergangs anhand einer Änderung einer Resonanzfrequenz (f₀) des Schwingreises zu detektieren.

13. Vorrichtung (1) nach zumindest einem der vorhergehenden Ansprüche,
**dadurch gekennzeichnet,**
**dass** die Vorrichtung (1) Mittel zum Anlegen eines, insbesondere elektrischen, oder magnetischen Feldes (B) umfasst, wobei die Elektronikeinheit (4) dazu ausgestaltet ist, das Auftreten des zumindest einen Phasenübergangs anhand zumindest einer Hysterese-Kurve zu erkennen.

## Claims

1. Apparatus (1) to determine and/or monitor the temperature (2) of a medium (5), comprising at least a temperature sensor (7), a reference element (5) for the insitu calibration and/or validation of the temperature sensor (7), and an electronics unit (4),
wherein the reference element (8) consists at least partially of a material (10, 15), for which at least one phase transition occurs at at least a first predefined phase transition temperature (Tₚₕ) in the temperature range that is relevant for the calibration of the temperature sensor (7), wherein the material (10, 15) remains in the solid phase for said phase transition,
**characterized in that**
the electronics unit (4) is designed to apply an excitation signal (U_{dyn}), which is dynamic over time, to the reference element and the temperature sensor (7) in the form of an alternating current or an alternating voltage.

2. Apparatus (1) as claimed in Claim 1,
**characterized in that**
the excitation signal (U_{dyn}) and/or a reception signal (U_{E,dyn}) received from the reference element (8) is a sinusoidal, rectangular, triangular, saw-tooth shaped or pulse-shaped signal.

3. Apparatus (1) as claimed in Claim 1 or 2,
**characterized in that**
the material (10, 15) is a ferroelectric material, a ferromagnetic material, or a superconductor material, particularly a high-temperature superconductor.

4. Apparatus (1) as claimed in at least one of the previous claims,
**characterized in that**
the electronics unit (4) is designed to vary the frequency and/or the amplitude do the excitation signal (U_{dyn}).

5. Apparatus (1) as claimed in at least one of the previous claims,
**characterized in that**
the reference element (8) is a capacitor element has a dielectric (10), wherein the dielectric (10) is at least partially made from the material for which the at least one phase transition occurs.

6. Apparatus (1) as claimed in at least one of the Claims 1 to 4,
**characterized in that**
the reference element (8) is a coil arrangement with at least one coil (13) and a magnetically conductive body (15), wherein the body (15) is made at least partially from the material for which the at least one phase transition occurs.

7. Apparatus (1) as claimed in at least one of the previous claims,
**characterized in that**
the electronics unit (4) is designed to determine an impedance (Z), or a variable dependent on the impedance (Z), at least of a component of the reference element (8), and to detect the occurrence of the phase transition on the basis of the impedance (Z), or the variable dependent on the impedance (Z), particularly the course of the impedance (Z) or the variable dependent on the impedance, depending on the time and/or the temperature.

8. Apparatus (1) as claimed in at least one of the previous claims,
**characterized in that**
the electronics unit (4) is designed to determine a loss angle (δ), or a variable, which is dependent on the loss angle (δ), of at least a component of the reference element (8), and to detect the occurrence of the phase transition on the basis of the loss angle (δ), or of the variable dependent on the loss angle (δ), particularly on the basis of the variation of the loss angle (δ) or the variable dependent on the loss angle (δ), depending on the time and/or the temperature.

9. Apparatus (1) as claimed in at least one of the previous claims,
**characterized in that**
the electronics unit (4) is designed to determine a capacitance (C), an inductance (L) or a variable, which is dependent on the capacitance (C) and/or inductance (L), at least of a component of the reference element (8), and to detect the occurrence of the phase transition on the basis of the capacitance (C), the inductance (L) or the variable dependent on the capacitance (C) and/or inductance (L), particularly the course of the capacitance (C), the inductance (L) or the variable dependent on the capacitance (C) and/or the inductance (L), depending on the time and/or the temperature.

10. Apparatus (1) as claimed in at least one of the previous claims,
**characterized in that**
the electronics unit (4) comprises a bridge circuit, particularly a Wien bridge or a Wien-Maxwell bridge, and **in that** the reference element (8) is a component of the bridge circuit.

11. Apparatus (1) as claimed in at least one of the Claims 1 to 9,
**characterized in that**
the electronics unit (4) comprises an electrical oscillating circuit, and **in that** the reference element (8) is a component of the oscillating circuit.

12. Apparatus (1) as claimed in Claim 11,
**characterized in that**
the electronics unit (4) is designed to detect the occurrence of the at least one phase transition on the basis of a change of a resonance frequency (fo) of the oscillating circuit.

13. Apparatus (1) as claimed in at least one of the previous claims,
**characterized in that**
the apparatus (1) comprises means to apply a field (B), particularly an electric field, or a magnetic field, wherein the electronics unit (4) is designed to detect the occurrence of the at least one phase transition by means of at least one hysteresis curve.

## Revendications

1. Dispositif (1) destiné à la détermination et/ou à la surveillance de la température (2) d'un produit (5), comprenant au moins un capteur de température (7), un élément de référence (5) pour l'étalonnage et/ou la validation sur site du capteur de température (7), ainsi qu'une unité électronique (4),
l'élément de référence (8) consistant au moins partiellement en un matériau (10, 15), matériau (10, 15) pour lequel au moins une transition de phase se produit à au moins une première température de transition de phase (Tₚₕ) prédéfinie dans la gamme de température pertinente pour l'étalonnage du capteur de température (7), transition de phase pour laquelle le matériau (10, 15) reste en phase solide,
**caractérisé**
**en ce que** l'unité électronique (4) est conçue pour appliquer un signal d'excitation (U_{dyn}) dynamique dans le temps sous la forme d'un courant alternatif ou d'une tension alternative à l'élément de référence et au capteur de température (7).

2. Dispositif (1) selon la revendication 1,
**caractérisé**
**en ce que** le signal d'excitation (U_{dyn}) et/ou un signal de réception (U_{E,dyn}) reçu de l'élément de référence (8) est respectivement un signal sinusoïdal, rectangulaire, triangulaire, en dents de scie ou en forme d'impulsion.

3. Dispositif (1) selon la revendication 1 ou 2,
**caractérisé**
**en ce que** le matériau (10, 15) est un matériau ferroélectrique, un matériau ferromagnétique, ou un matériau supraconducteur, notamment un supraconducteur à haute température.

4. Dispositif (1) selon au moins l'une des revendications précédentes,
**caractérisé**
**en ce que** l'unité électronique (4) est conçue pour faire varier la fréquence et/ou l'amplitude du signal d'excitation (U_{dyn}).

5. Dispositif (1) selon au moins l'une des revendications précédentes,
**caractérisé**
**en ce que** l'élément de référence (8) est un élément de condensateur comprenant un diélectrique (10), le diélectrique (10) étant constitué au moins partiellement du matériau pour lequel se produit l'au moins une transition de phase.

6. Dispositif (1) selon au moins l'une des revendications 1 à 4,
**caractérisé**
**en ce que** l'élément de référence (8) est un arrangement de bobines comprenant au moins une bobine (13) et un corps magnétiquement conducteur (15), le corps (15) étant constitué au moins partiellement du matériau pour lequel se produit l'au moins une transition de phase.

7. Dispositif (1) selon au moins l'une des revendications précédentes,
**caractérisé**
**en ce que** l'unité électronique (4) est conçue pour déterminer une impédance (Z), ou une grandeur dépendant de l'impédance (Z), d'au moins un composant de l'élément de référence (8), et pour détecter l'apparition de la transition de phase sur la base de l'impédance (Z), ou de la grandeur dépendant de l'impédance (Z), notamment la variation de l'impédance (Z) ou de la grandeur dépendant de celle-ci, en fonction du temps et/ou de la température.

8. Dispositif (1) selon au moins l'une des revendications précédentes,
**caractérisé**
**en ce que** l'unité électronique (4) est conçue pour déterminer un angle de perte (δ), ou une grandeur dépendant de l'angle de perte (δ), d'au moins un composant de l'élément de référence (8), et pour détecter l'apparition de la transition de phase sur la base de l'angle de perte (δ), ou de la grandeur dépendant de l'angle de perte (δ), notamment sur la base de la variation de l'angle de perte (δ) ou de la grandeur dépendant de l'angle de perte (δ) en fonction du temps et/ou de la température.

9. Dispositif (1) selon au moins l'une des revendications précédentes,
**caractérisé**
**en ce que** l'unité électronique (4) est conçue pour déterminer une capacité (C), une inductance (L) ou une grandeur dépendant de la capacité (C) et/ou de l'inductance (L) d'au moins un composant de l'élément de référence (8), et pour détecter l'apparition de la transition de phase sur la base de la capacité (C), de l'inductance (L) ou de la grandeur dépendant de la capacité (C) et/ou de l'inductance (L), notamment la variation de la capacité (C), de l'inductance (L) ou de la grandeur dépendant de la capacité (C) et/ou de l'inductance (L) en fonction du temps et/ou de la température.

10. Dispositif (1) selon au moins l'une des revendications précédentes,
**caractérisé**
**en ce que** l'unité électronique (4) comprend un circuit en pont, notamment un pont de Wien ou un pont de Wien-Maxwell, et **en ce que** l'élément de référence (8) est un composant du circuit en pont.

11. Dispositif (1) selon au moins l'une des revendications 1 à 9,
**caractérisé**
**en ce que** l'unité électronique (4) comprend un circuit oscillant électrique, et **en ce que** l'élément de référence (8) est un composant du circuit oscillant.

12. Dispositif (1) selon la revendication 11,
**caractérisé**
**en ce que** l'unité électronique (4) est conçue pour détecter l'apparition de l'au moins une transition de phase sur la base d'un changement d'une fréquence de résonance (fo) du circuit oscillant.

13. Dispositif (1) selon au moins l'une des revendications précédentes,
**caractérisé**
**en ce que** le dispositif (1) comprend des moyens pour appliquer un champ (B), notamment un champ électrique, ou un champ magnétique, l'unité électronique (4) étant conçue pour détecter l'apparition de l'au moins une transition de phase au moyen d'au moins une courbe d'hystérésis.
